(19) Europäisches Patentamt
European Patent Office
Office européen des brevets

(11) **EP 4 093 218 B1**

(12) **EUROPEAN PATENT SPECIFICATION**

(45) Date of publication and mention
of the grant of the patent:
**25.10.2023   Bulletin 2023/43**

(21) Application number: **21719959.5**

(22) Date of filing: **17.03.2021**

(51) International Patent Classification (IPC):
*A23N 1/02* *(2006.01)*   *A47J 19/04* *(2006.01)*
*A23G 9/04* *(2006.01)*   *A47J 43/044* *(2006.01)*
*A47J 31/40* *(2006.01)*

(52) Cooperative Patent Classification (CPC):
**A23N 1/02; A23G 9/045; A23G 9/34; A23G 9/42;
A23G 9/52; A23L 2/02; A47J 19/04; A47J 31/40;
A47J 43/044**

(86) International application number:
**PCT/IB2021/052205**

(87) International publication number:
**WO 2021/186353 (23.09.2021 Gazette 2021/38)**

(54) **METHOD AND DEVICE FOR THE EXTEMPORANEOUS PREPARATION OF A SLUSH, A SORBET
OR A FRUIT AND / OR VEGETABLE BASED DRINK**

VERFAHREN UND VORRICHTUNG ZUR SPONATANEN ZUBEREITUNG EINES SORBETS, EINES
GEFRORENEN ODER FRUCHTSAFT- UND / ODER GEMÜSESAFTGETRÄNKS

PROCEDE ET DISPOSITIF POUR LA PREPARATION SPONTANEE D'UN SORBET, DES
BOISSONS SEMI-FREDO OU A BASE DES FRUITS ET / OU VEGETABLES

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **17.03.2020   IT 202000005641
08.05.2020   IT 202000010384**

(43) Date of publication of application:
**30.11.2022   Bulletin 2022/48**

(73) Proprietor: **Sammontana S.p.A.
50053 Empoli (FI) (IT)**

(72) Inventors:
• **SANTONI, Massimo**
  **50053 Empoli (Firenze) (IT)**
• **ROSSI, Egidio**
  **50053 Empoli (Firenze) (IT)**
• **MURER, Roberto**
  **50053 Empoli (Firenze) (IT)**
• **MIRABILE, Vincenzo**
  **50053 Empoli (Firenze) (IT)**
• **VAQUERO RODRIGUEZ, Vanessa**
  **50053 Empoli (Firenze) (IT)**

(74) Representative: **Porta & Consulenti Associati
S.p.A.
Via Vittoria Colonna, 4
20149 Milano (IT)**

(56) References cited:
WO-A1-97/43909         WO-A1-2008/140927
WO-A1-2017/199182      WO-A2-2007/072184
WO-A2-2009/124823      WO-A2-2010/040744
US-A- 4 293 580        US-A1- 2007 196 538
US-B1- 6 330 850

## Description

The present invention relates to a method for the extemporaneous preparation of an edible plant-based slush, sorbet or drink, in particular based on fruit and/or vegetables.

The present invention further relates to a device for the extemporaneous preparation of an edible plant-based slush, sorbet or drink.

The term "extemporaneous preparation" indicates a preparation *in situ*, e.g. at a point of sale or in the home, of a food product ready for immediate consumption. Within the context of this document, such food product is for example a slush, a sorbet or a drink.

Fruit and/or vegetable based slushes, sorbets and drinks are very popular with consumers and are often requested in public premises that serve food and drink.

For that purpose, frozen semi-finished products based on fruit, vegetables or a mixture of fruit and vegetables can be used starting from which liquid drinks can be made by adding a liquid part to the frozen semi-processed products.

In particular, frozen semi-finished products are known, which are sold in single-portion packages containing a mixture of pieces of fruit or vegetables frozen in predetermined quantities and weights and preparation devices specifically designed to operate on frozen pieces of fruit or vegetables.

In particular, the preparation devices comprise a base and a removable jug inside which a rotating blade is positioned.

The frozen pieces of fruit or vegetables are arranged in the jug into which a predetermined quantity of liquid is added (e.g. fruit juice) and the blade is made to rotate for a pre-set time duration, calculated on the basis of the contents of the single-portion packages and the amount of liquid added. The blade chops the pieces of fruit or vegetables into increasingly smaller pieces and amalgamates them with the liquid, in turn stirred by the blade, until the liquid drink is obtained.

In the preparation of a slush or a sorbet, different preparation devices are usually used from those used for preparing liquid drinks and different semi-finished products are also used from those used for the preparation of liquid drinks.

Within the context of the extemporaneous preparation of food products of this type for consumption *in situ*, there is a strongly perceived need, especially in very popular public premises, to be able to prepare fruit and/or vegetable based slushes, sorbets and liquid drinks quickly and repeatably for reducing consumers' waiting time.

At the same time and in recent times there has also been a strongly felt need by sellers of such food products to provide consumers with healthy products having nutritional characteristics that are as "natural", uniform and high quality as possible.

US 4 293 580 discloses fruit and vegetable juice concentrates, such as orange juice, prepared by simultaneously whipping and freezing a concentrate in the presence of whipping agents and, optionally, stabilizers. Suitable whipping agents to be employed include soya proteins and egg whites. The frozen fruit concentrate has a soft whipped texture, which makes it divisible into aliquot portions for use by a consumer.

WO 2010/040744 discloses an automatic machine for preparing slushes, ice creams, milkshakes and/or the like, comprising a container body adapted to contain at least one frozen tablet of slush, ice cream, milkshake and/or the like, provided with means for crushing the frozen tablet and with means for the evacuation of the tablet once it has been crushed, respectively, to obtain and dispense the final product.

US 2007/196538 discloses an ice-containing product and a process for making the same, which product comprises at -18°C, (i) a first population of frozen particles, which first population consists essentially of frozen edible particles, or a mixture of frozen edible particles and ice particles, having a particle size of greater than 0.5 mm; and (ii) a second population of ice particles having a mean particle size such that the ratio of the mean particle size for the first population to the mean particle size for the second population is greater than 10 and less than 100.

The ratio of the weight of the first population of particles to the weight of the second population is from 2:3 to 9:1 and the first population and second population together provide at least 90% of the frozen particles present in the product.

WO 97/43909 discloses a frozen drink machine and a method for making frozen drinks from a frozen substance which has been frozen into a cup. According to the method and the machine of this reference, a cup containing a frozen substance is positioned in a cup support in the frozen drink machine. A rotatable blade having features for grinding the frozen substance and for aerating the ground frozen substance is lowered into the cup, grinding the frozen substance while a liquid is simultaneously introduced into the cup. In an alternative embodiment, a second blade is provided which incorporates air into the liquid before the liquid is introduced into the cup.

US 6,330,850 relates to a method and a device for the on demand preparation of beverages or sauces from water-dispersible foodstuffs. The device includes one or more pressing units that urge one or more solid refills of a water-dispersible foodstuff towards one or more abrading devices so that the refill contacts the abrading device and the abrading device abrades the refill to provide an amount of powdered foodstuff that is collected in a collector and combined with water to provide the beverage.

The Applicant therefore set out to provide a method for the extemporaneous preparation of a slush, a sorbet or a drink and a device able to actuate such method that enable the quick and repeatable preparation *in situ* of slushes and sorbets based on fruit, vegetables or a mixture of fruit and vegetables, and liquid drinks based on fruit, vegetables or a mixture of fruit and vegetables. All this while guaranteeing that the slushes and sorbets thus prepared extemporaneously have nutritional characteristics that are as "natural", uniform and with as high nutritional profile as possible.

The Applicant has found that it is possible to achieve this two-fold objective thanks to a preparation method that makes use of loose pieces of suitable size and weight of a frozen aerated semi-finished food product based on fruit and/or vegetables having a specific sugar content and overrun characteristics such as to enable a dissolution kinetics in an aqueous component, e.g. water or fruit and/or vegetable juice, which is particularly favourable.

The present invention therefore relates, in a first aspect thereof, to a method for the extemporaneous preparation of a fruit and/or vegetable based slush, sorbet or drink as defined in attached claim 1.

The Applicant has found that the overrun values of the frozen aerated semi-finished food product set out in attached claim 1 are associated with an optimal dispersion kinetics in small grains or dissolution of loose pieces of frozen aerated semi-finished food product in an appropriate dispersion/dissolution liquid, e.g. water or fruit and/or vegetable juice.

The Applicant has in particular found an advantageous synergistic effect of the aeration of the pieces of frozen aerated semi-finished food product within a specific overrun range on the mechanical action of grinding or dissolution of the loose pieces of frozen aerated semi-finished food product in the liquid and by the rotary member of the device for the extemporaneous preparation of the slush, sorbet or drink.

Thanks to this synergistic action, it has been found in particular that it is possible both to accelerate the grinding or dissolution process of the loose pieces of frozen aerated semi-finished food product, and obtain a final product (slush, sorbet or drink) that is particularly soft and has organoleptic and consistency characteristics which are particularly uniform and popular with consumers even in a very reduced preparation time.

This reduction in preparation times is particularly desirable and compatible with all the extemporaneous preparations of products ready for immediate consumption typical of commercial premises such as for example bars, ice-cream shops and pastry shops.

Furthermore, the Applicant has found that the aforesaid specific overrun range that positively affects the mechanical grinding or dissolution action of the loose pieces of frozen aerated semi-finished food product in the liquid can be achieved by exploiting the simple sugars already naturally present in said fruit and/or vegetables of the semi-finished product without the need for external additives.

The Applicant has also understood that the optimal dispersion or dissolution kinetics of the loose pieces of frozen aerated semi-finished food product in a liquid prevents having to grind the frozen semi-finished product before it is inserted into the container or after it has been inserted into the container, making it possible both to reduce the necessary preparation times for grinding the loose pieces of frozen aerated semi-finished food product and to prevent subjecting the loose pieces of frozen aerated semi-finished food product to high mechanical stress.

Advantageously, the reduction of the mechanical stress on the loose pieces also enables the organoleptic and nutritional characteristics of the starting semi-finished food product to be preserved, precisely comprising fruit and/or vegetables.

In particular, according to the temperature of the liquid inserted into the container, a semi-solid food product can be obtained quickly, such as a slush or a sorbet or a food product with a liquid, creamy or paste-like consistency making a more or less dense drink.

The overrun is a parameter commonly used in the food industry field to indicate a measurement of the increase in volume of a product, in the case of the pieces of frozen aerated semi-finished product, with respect to a product, in this case a starting mixture of edible plants based on fruit and/or vegetables.

In frozen aerated semi-finished food products, the overrun is calculated according to the formula (1) provided below:

$$\text{OV } [\%] = (\text{PS} - \text{PS}_{aer})/(\text{PS}_{aer}) \text{ x } 100 \qquad (1)$$

wherein:

PS is the specific weight, calculated in [g/ml], of the starting food mixture, not yet frozen and aerated, used for manufacturing loose pieces, and

$\text{PS}_{aer}$ is the specific weight, calculated in [g/ml], of the loose pieces of semi-finished product once the starting food mixture has been frozen and aerated.

Modern batch freezing apparatuses, such as continuous freezers, are able to regulate and estimate the overrun during the batch freezing. Generally, for greater precision, the values thus obtained are compared with those determined experimentally starting from an empirical estimate of the aforesaid specific weights PS and $PS_{aer}$, respectively, of the starting food mixture and the aerated food mixture.

According to a first method, the specific weight of the starting food mixture (PS), not yet frozen and aerated, can be empirically calculated from the ratio between the weight of a piece of frozen semi-finished product (e.g. at a temperature comprised between -20° and -5°C), determined for example using an analytical balance, and the volume of liquid purée obtained by dissolving the piece of semi-finished product heating it to about 0-10°C, said volume being determined for example through a graduated cylinder.

More simply, according to an alternative method, the specific weight of the starting food mixture (PS), not yet frozen and aerated, can be empirically calculated from the ratio between the weight and the volume of a quantity of food mixture being dissolved (at a temperature comprised between 0-10°C) and the known volume, the weight and volume being determined again, for example, respectively by means of an analytical balance and graduated cylinder.

The specific weight of the frozen and aerated vegetable purée ($PS_{aer}$) is empirically calculated from the ratio between the weight of a piece of frozen aerated semi-finished product (e.g. at a temperature comprised between -20° and -5°C), again determined for example through an analytical balance, and the volume of the same piece of aerated frozen semi-finished product, still in the solid state. The volume of the piece of frozen aerated semi-finished product is for example determined by immersing it in a known quantity of water inside a graduated cylinder, and subtracting the volume of water detected prior to the immersion of the piece of semi-finished product inside it from the volume of water detected after immersion.

The loose pieces of frozen aerated semi-finished food product that can be used in the method according to the invention for the extemporaneous preparation of a slush, a sorbet or a drink based on fruit and/or vegetables can be manufactured through a process comprising the steps of:

a) providing a homogeneous food mixture comprising at least one edible plant based on fruit and/or vegetables, said food mixture comprising an amount of simple sugars derived from simple sugars naturally contained in said fruit and/or vegetable comprised between 10 and 30 g/100g of food mixture;

b) freezing and aerating the homogeneous food mixture so as to form a frozen and aerated food mixture having an overrun comprised between 5 and 35%, preferably between 5 and 25%;

c) feeding the frozen and aerated food mixture thus obtained to an extrusion head provided with a die-plate having at least one opening;

d) extruding the frozen and aerated food mixture through the opening of the die-plate of the extrusion head; and

e) cutting the extruded, frozen and aerated food mixture so as to obtain a frozen and aerated semi-finished food product in loose pieces comprising at least one edible plant based on fruit and/or vegetables.

The present invention therefore further relates, in a second aspect thereof, to a device for the extemporaneous preparation of a slush, a sorbet or a drink based on fruit and/or vegetables as defined in attached claim 7. The device according to the invention comprises:

a support frame;

a container;

a positioning member connected to the support frame configured to position a container in a preparation area;

a first nozzle for dispensing a liquid placed at the positioning member and configured to introduce liquid at room temperature into the container;

a second nozzle for dispensing a liquid placed at the positioning member and configured to introduce liquid at a higher temperature than room temperature into the container;

a rotary member, slidably coupled in an axial direction to the positioning member and movable with respect to the positioning member between a first axial position and a second axial position;

a movement kinematic mechanism operatively connected between the positioning member and the rotary member to move the rotary member with respect to the positioning member between the first axial position and the second axial position;

wherein the rotary member comprises a head pivotable about an axial axis of rotation and movable in a plurality of operating conditions in the preparation area, and wherein each operating condition of the plurality of operating conditions of the head of the rotary member corresponds to a different axial position of the rotary member with respect to the preparation area between the first axial position and the second axial position.

The rotary member is configured to rotate about an axis of rotation. Such axis of rotation is the main reference axis for the elements that are part of the device; the direction indications and the like shall refer thereto, such as "axial", "radial", "circumferential", "diametral", unless a different reference axis is explicitly specified. The indications "towards the outside", "externally", and "towards the inside", "internally" referring to radial directions must be interpreted, respectively, as away from the axis of rotation or towards the axis of rotation. With respect to the axis of rotation two rotation directions are defined opposite one another, in particular a first angular direction (which preferably coincides with the angular rotation direction of the rotary member) and a second angular direction.

The positioning member enables a container to be positioned in which frozen semi-finished products based on fruit, vegetables or a mixture of fruit and vegetables have been arranged in a predefined preparation area with respect to the support frame.

The head of the rotary member is configured to operate on the contents of the container so as to make a fruit and/or vegetable food preparation extemporaneously.

The possibility to arrange the head of the rotary member between a plurality of operating conditions wherein each operating condition corresponds to a different axial position of the rotary member with respect to the preparation area, and therefore with respect to the container, enables the loose pieces of frozen aerated semi-finished product to be intercepted regardless of how they are arranged inside the container. In particular, the head of the rotary member is able to intercept the loose pieces of frozen aerated semi-finished product also when part of them adhere or tend to adhere to the walls of the container.

Therefore, the quantity of liquid to be added to the loose pieces of frozen aerated semi-finished product can be selected exclusively or at least mainly based on the recipe specifications as the liquid part to be added to the loose pieces of frozen aerated semi-finished product does not in fact have the main task of enabling the rotary member to effectively intercept the loose pieces of frozen aerated semi-finished product.

By dispensing liquid at room temperature from the first dispensing nozzle it is possible to make a final preparation that contains small frozen granules, generally comprised between 0.5 and 3 mm, which give the final preparation a semi-solid slush or sorbet consistency.

Alternatively, by dispensing hot liquid (i.e. at a temperature greater than room temperature) from the second dispensing nozzle, it is possible to make a final preparation with a substantially liquid, creamy or paste-like consistency, making a more or less dense drink.

In at least one of the aforesaid aspects, the present invention can present at least one of the preferred characteristics described below considered singularly or in combination.

Preferably, the loose pieces of frozen aerated semi-finished food product are obtained from one or more fruit and/or vegetable purées, possibly mixed with one or more fruit and/or vegetable juices.

In this way, it is advantageously possible to diversify and customize the tastes of the food preparation (slush, sorbet or drink) which can be obtained starting from pieces of frozen aerated semi-finished product, at the same time obtaining a food preparation having high profile organoleptic and nutritional characteristics.

Preferably, the insertion into the container of the pieces of frozen aerated semi-finished food product precedes feeding into the container said dosed quantity of liquid.

In this way, it is advantageously possible to regulate in an optimal way the grinding or dissolution steps of the frozen aerated semi-finished food product in the liquid.

Preferably, the method according to the invention comprises associating the container with the pieces of frozen aerated semi-finished food product inserted therein with a positioning member of the aforesaid device configured to retain the container and occlude the insertion mouth of the container.

In this way it is advantageously possible to prevent the accidental leakage of product from the container during the rotation of the rotary member in the container itself.

The method according to the invention comprises:

- feeding said liquid at room temperature into the container before actuating said step c') of grinding the loose pieces of frozen aerated semi-finished food product in the liquid for preparing a slush or a sorbet, or

- feeding said liquid at a higher temperature than room temperature into the container before actuating said step c") of dissolving the loose pieces of frozen aerated semi-finished food product in the liquid for preparing a drink.

In this way it is advantageously possible to optimize the times for the extemporaneous preparation of a semi-solid product (slush or sorbet) or liquid (drink) starting from loose pieces of frozen aerated semi-finished food product.

The method according to the invention comprises:

- feeding the liquid at room temperature into the container through a first nozzle for preparing a slush or sorbet, or

- feeding the liquid at a higher temperature than room temperature into the container through a second dispensing nozzle for preparing a drink.

In this way it is advantageously possible to perform an extemporaneous preparation of a semi-solid product (slush or sorbet) or liquid (drink) starting from loose pieces of frozen aerated semi-finished food product through a same preparation device with the clear advantages of the actuation flexibility of the method.

In a preferred embodiment, the method according to the invention comprises heating the liquid, preferably to a temperature comprised between 60 and 75°C, more preferably comprised between 70 and 75°C, for example about 75°C, before feeding it into the container.

In this way it is advantageously possible to reduce to a minimum the times for the extemporaneous preparation of a liquid product (drink) starting from the loose pieces of frozen aerated semi-finished food product.

In a preferred embodiment of the method according to the invention, c') grinding or c") dissolving in the container the loose pieces of frozen aerated semi-finished food product in the liquid comprises moving a head of said rotary member of the device between a plurality of axial positions inside the container.

In this way it is advantageously possible to perform an extemporaneous preparation of semi-solid product (slush or a sorbet) or liquid product (drink) having homogeneity and softness particularly popular with consumers.

Preferably, the aforesaid quantity of simple sugars contained in the loose pieces of frozen aerated semi-finished food product exclusively comes from the simple sugars already naturally present in the plant-based components of the food mixture.

In this way, it is advantageously possible to achieve the technical effects described above with reference to the beneficial effect on the mechanical grinding or dissolution action of the loose pieces of semi-finished food product without the need for any external additions of less natural ingredients that have lower nutritional value.

Preferably, the loose pieces of frozen aerated semi-finished food product comprise a quantity of fructose comprised between 1 and 15 g/100g, more preferably between 3 and 10 g1100g, of semi-finished product.

Fructose is a monosaccharide naturally present in fruit and vegetables, and is the simple sugar with the highest sweetening power present in nature.

Preferably, the loose pieces of frozen aerated semi-finished food product comprise a quantity of glucose less than 15 g/100g, more preferably comprised between 1 and 15 g/100g, even more preferably between 3 and 10 g/100g, of semi-finished product.

Preferably, alternatively or additionally, the loose pieces of frozen aerated semi-finished food product comprise a quantity of saccharose less than 10 g/100g, more preferably less than 5 g/100g, of semi-finished product.

In preferred embodiments, the pieces of frozen aerated semi-finished food product comprise ingredients of natural origin only.

As such, the loose pieces of frozen aerated semi-finished food product are substantially free from chemical substances of an artificial nature and have all those advantageous healthy and natural characteristics connected with the use of ingredients of natural origin only.

Thus, in a preferred embodiment, the loose pieces of frozen aerated semi-finished food product are substantially free from sweeteners.

In the present description and appended claims, "sweetener" means a substance used to give a sweet flavour to foods or used as an extemporaneous substitute for sugars, in compliance with EC Regulation no. 1333/2008 such as, for example, aspartame (E951), sucralose (E955) and acesulfame K (E950).

In a further preferred embodiment, the loose pieces of frozen aerated semi-finished food product are substantially free from food additives such as, for example, carob bean gum (E410), carrageenan (E407) and pectin (E440).

In these preferred embodiments, the loose pieces of frozen aerated semi-finished food product are therefore free from chemical substances of a synthetic nature which may in some way affect consumers' health.

Preferably, the loose pieces of frozen aerated semi-finished food product have a solid residue comprised between 15 and 40 g/100g, more preferably comprised between 18 and 35 g/100g.

Essentially, the solid residue of the pieces of frozen aerated semi-finished food product preferably includes the aforesaid simple sugars, dietary fibre, and fats and proteins in smaller quantities.

Preferably, the loose pieces of frozen aerated semi-finished food product are loose pieces that are dosed and packaged in bags having a predetermined weight.

The loose pieces of frozen aerated semi-finished food product have a size configuration particularly suitable for use for preparing a food preparation in the form of a drink, sorbet or slush.

In a preferred embodiment, each piece of frozen aerated semi-finished food product has a maximum length comprised between 11 and 18 mm, preferably between 11 and 17, more preferably between 12 and 16 mm.

Alternatively or in combination, each loose piece of frozen aerated semi-finished food product has a weight comprised between 1.4 and 3.8 g, preferably between 1.8 and 3.2 g.

For the purposes of the invention, the loose pieces of frozen aerated semi-finished food product have an identical shape to one another.

In preferred embodiments, the loose pieces of frozen aerated semi-finished food product have a substantially cylindrical or disc-shaped conformation.

Preferably, each loose piece of frozen aerated semi-finished food product has in this case a length, measured along the longitudinal axis of the cylinder, comprised between 11 and 18 mm, preferably between 11 and 17 mm, more preferably comprised between 12 and 16 mm and a transverse dimension (e.g. the diameter, in the case of opening the circular extrusion head) comprised between 13 and 17 mm, preferably between 14 and 16 mm.

Preferably, for every 10g of loose pieces of frozen aerated semi-finished food product inserted into the container from 3 to 8 ml, preferably from 6 to 8, more preferably from 6 to 7 ml, of liquid are fed into the container. In some embodiments it is possible to use for example 3.3 ml of liquid for every 10g of loose pieces of frozen aerated semi-finished product.

Preferably, the loose pieces of frozen aerated semi-finished food product are inserted into the container and the container with the loose pieces of frozen aerated semi-finished food product inside it is positioned in the aforesaid preparation area of the preparation device.

Preferably, said support frame has a support base, said preparation area being axially interposed between the positioning member and the support base.

The support base of the frame is configured to enable the device to be arranged on a bench or anyway on a work surface. By arranging the positioning member axially above the support base with the preparation area axially interposed between the support base and the positioning member, the container can be handled during all the preparation operations of the food preparation with the mouth facing upwards.

Preferably, the container is associated with the positioning member with preferably a cylindrical mouth of the container facing upwards.

Preferably, said positioning member comprises a coupling portion configured to retain the container.

Preferably, the container with the pieces of frozen aerated semi-finished food product inside it is connected to the coupling portion.

Preferably, said coupling portion has a cylindrical guide surface extending about said axis of rotation, and a groove or projection arranged at said guide surface and extending circumferentially and/or axially with respect to said axis of rotation.

Preferably, it is provided to translate axially and rotate about the axis of rotation the cylindrical mouth of the container along the guide surface.

Preferably, it is provided to engage the groove or projection of the coupling portion with a corresponding groove or projection of the container to enable the connection to the coupling portion.

Preferably, the container comprises a connection portion configured to engage the coupling portion for stably and reversibly connecting the container to the positioning member.

Preferably, one from among said coupling portion and connection portion has at least one groove extending circumferentially and/or axially with respect to said axis of rotation and the other from among said coupling portion and connection portion comprises at least one protrusion configured to engage said at least one groove for constraining said container to said coupling portion.

Preferably said at least one groove is L-shaped.

Preferably said coupling portion has a plurality of L-shaped grooves circumferentially distributed on the guide surface and the connection portion comprises a corresponding plurality of projections emerging radially from the mouth of the container in a radial plane.

Preferably, said head of the rotary member in said first axial position is arranged at the access mouth when the container is coupled to the positioning member.

Preferably, said head of the rotary member in said second axial position is arranged at a bottom wall of the container when the container is coupled to the positioning member.

Preferably, said coupling portion comprises an occlusion wall facing towards the preparation area.

Preferably, it is provided to occlude the mouth of the container when the container is coupled to the coupling portion.

The occlusion wall prevents the leakage of material from the container during the rotation of the rotary member in the mixing volume. The fact that the occlusion wall is placed on the connection portion on the side facing towards the preparation area enables the container to be automatically occluded with the coupling to the device, without having to apply further covers or caps.

Preferably and as mentioned, the liquid is fed into the container through the first dispensing nozzle for the extemporaneous preparation of a slush or a sorbet or the liquid is fed at a higher temperature into the container through the second dispensing nozzle for the extemporaneous preparation of a drink.

The first dispensing nozzle enables a liquid to be dispensed, preferably water or a fruit and/or vegetable juice, at the positioning member.

Preferably, it is provided, when the container is connected to the positioning member, to use the first nozzle to insert a quantity of liquid at room temperature and preferably in a predefined quantity, into the container.

Preferably, it is provided, when the device is not being used for the extemporaneous preparation of a slush, a sorbet or a drink, to use the first nozzle for washing the positioning member for preventing contamination between subsequent or different preparations, preferably at the end of a preparation or before a new preparation.

Preferably, said first nozzle is placed at said occlusion wall on the side facing towards said occlusion surface.

Preferably, said first nozzle is in fluid communication with a source of liquid and with a pump connected to said source of liquid for dispensing predetermined quantities of liquid.

Preferably, when the first nozzle is used to dispense into the container a predetermined quantity of liquid at room temperature, such liquid is mixed by the head of the rotary member with pieces of frozen aerated semi-finished product to obtain a preparation such as slush or sorbet.

The second dispensing nozzle enables a liquid to be dispensed, preferably water or a fruit and/or vegetable juice, at the positioning member.

Preferably, it is provided, when the container is connected to the positioning member, to use the second nozzle to insert a quantity of liquid at a temperature higher than room temperature and preferably in a predefined quantity, into the container.

Preferably, it is provided, when the device is not being used for the extemporaneous preparation of a slush, a sorbet or a drink, to use the second nozzle for washing the positioning member for preventing contamination between subsequent or different preparations, preferably at the end of a preparation or before a new preparation.

Preferably, said second nozzle is placed at said occlusion wall on the side facing towards said occlusion surface.

Preferably, said second nozzle is in fluid communication with a source of liquid and with a pump connected to said source of liquid for dispensing predetermined quantities of liquid.

Preferably, said second nozzle is in fluid communication with a heater for dispensing liquid at a temperature higher than room temperature.

Preferably, the liquid is heated to a temperature comprised between 60 and 75°C, preferably comprised between 70 and 75°C, for example about 75°C, before dispensing it from the second dispensing nozzle.

Preferably, the first nozzle and the second nozzle are activated selectively and alternatively to one another as a function of the type of preparation to be prepared.

Preferably, when the second nozzle is used to dispense into the container a predetermined quantity of liquid at a temperature higher than room temperature, such liquid is mixed by the head of the rotary member with loose pieces of frozen aerated semi-finished product to obtain a preparation such as a drink.

Preferably, a pump is provided, connected to a source of liquid, to a first fluid supply line connected to the first nozzle and to a second fluid supply line connected to the second nozzle.

Preferably, the heater is active along the second fluid supply line.

In this way, with a single pump and a single source of liquid, it is possible to dispense liquid at room temperature from the first nozzle or heated liquid from the second nozzle simply by selectively opening and closing the first fluid supply line and the second fluid supply line.

Preferably, a first solenoid valve is provided, which is active on the first fluid supply line.

Preferably, a second solenoid valve is provided, which is active on the second fluid supply line between the heater and the second nozzle.

Preferably, the solenoid valves are activated in a controlled and predetermined way for selecting the activation of the first or of the second dispensing nozzle and therefore dispensing liquid at room temperature or hot liquid.

When the container is connected to the positioning member, the second nozzle can be used as an alternative to the first nozzle to introduce a quantity of hot liquid, preferably water or a fruit and/or vegetable juice and preferably in a predefined quantity into the container.

When the second dispensing nozzle is used to introduce hot liquid into the container a food preparation can be obtained with a lower concentration of frozen crystals, and therefore more liquid, with respect to the case in which liquid is introduced into the container at room temperature.

Preferably, said occlusion wall has a hole and said rotary member comprises a rotary shaft inserted into said hole, said head being connected to an axial end of said rotary shaft, a hydraulic sealing system being active between said hole and said rotary shaft.

The hole in the occlusion wall enables the rotary member to cross the occlusion wall and reach the preparation temperature. The sealing system enables to prevent leakages of liquid through the hole during the rotation of the rotary member, which prevents any possible damage to the electrical components of the machine and prevents any foreign body or liquid from entering the container.

Preferably, said hydraulic sealing system comprises a sleeve axially slidable in the hole and axially integral with the rotary shaft, wherein the rotary shaft is rotatable with respect to the sleeve about said axis of rotation within the sleeve.

In this way, it is sufficient to guarantee a hydraulic seal between two components in mutual translation (i.e. between the hole and the sleeve) to guarantee the hydraulic seal between the hole and the rotary member, substantially simplifying the hydraulic sealing system.

Preferably, the head of the rotary member is placed at an axial end of the rotary shaft and projects axially beyond a first axial end of the sleeve.

Preferably, a cylindrical bellows is provided having a first end which abuts against the head of the rotary member and a second end, opposite the first one, which abuts against said sleeve at a first axial end thereof.

The cylindrical bellows therefore operates between the head of the rotary member and the sleeve preventing any infiltrations between the rotary shaft and the sleeve at the head of the rotary member.

Preferably, the sleeve comprises a bush coupled with said rotary shaft at said first end of the sleeve, said cylindrical bellows being in abutment against said bush.

The bush guarantees that the rotary shaft can rotate within the sleeve.

Preferably, any product being prepared which deposits and adheres to the occlusion wall is removed.

Preferably, the removal of any product being prepared that deposits and adheres to the occlusion wall is actuated during the rotation of the head of the rotary member in the container containing the product being prepared starting from the liquid and from the loose pieces of frozen aerated semi-finished food product.

Preferably, said rotary member comprises a scraper configured to remove material adhering to said occlusion wall during a rotation of the rotary member when in the first axial position.

Preferably, said scraper comprises a portion with a radial extension which extends perpendicular to the axis of rotation and parallel to the occlusion wall and which lies adjacent to said occlusion wall when said rotary member is in the first axial position.

Preferably, said scraper comprises an inclined portion which extends from a first end axially proximal to the axis of rotation to a second one connected to the radial extension portion.

Preferably, the removal of any product being prepared that is deposited on and adheres to the occlusion wall is actuated by said scraper when said rotary member is in the first axial position.

Preferably, said head of the rotary member comprises a plurality of radial blades.

Preferably, the scraper is provided on a blade of the plurality of blades.

Preferably, said occlusion wall has a circular occlusion surface facing towards the preparation area, said scraper being parallel and adjacent to said occlusion surface and adjacent to said occlusion surface when said rotary member is in the first axial position.

Preferably, said positioning member is integral with said support frame and said rotary member is slidably coupled to said support frame.

Preferably, said movement kinematic mechanism comprises at least one guide with an axial extension connected to the support frame, said rotary member being slidably coupled to said at least one guide.

Preferably, the rotary member and the head of the rotary member can be moved between the various operating conditions in an assisted and guided way.

The movement of the rotary member in the correct axial direction is therefore always guaranteed and not dependent on the ability, precision or sensitivity of the user of the device.

Preferably, said movement kinematic mechanism comprises a handgrip coupled to the rotary member for moving the rotary member along the axial direction between the first axial position and the second axial position.

Preferably, the movement of the rotary member and the head of the rotary member between the various operating conditions is actuated by moving the handgrip along an axial direction.

Preferably, said movement kinematic mechanism comprises an elastic return member operatively arranged between the rotary member and the support frame for exercising a force on the rotary member directed from the second axial position towards the first axial position.

Preferably, the movement of the rotary member from the first axial position to the second axial position comprises applying to the handgrip a force, directed in the axial direction towards the base of the device, greater than the elastic return force exercised by the return member.

Preferably, the movement of the rotary member from the second axial position to the first axial position comprises the application on the handgrip of a lower axial force than the elastic return force exercised by the return member or the suspension of the application of the axial force on the handgrip.

The elastic return member is preferably configured to retain the rotary member in the first axial position when the device is not being used.

Preferably, the device comprises a protection element coupled to the positioning member and movable between an engagement position, in which it prevents access to the preparation area, and a disengagement position in which it enables access to the preparation area.

When the protection element is in the engagement position, access to the preparation area is precluded and therefore a user does not have access to the head of the rotary member, preventing any accidental and potentially dangerous contact with the rotary head during the operation thereof.

Preferably, said mixing volume has a first maximum dimension measured on a radial plane, and said head of the rotary member has a second maximum dimension measured on a radial plane; the difference between the first maximum dimension and the second maximum dimension being less than 10 mm, preferably less than 5 mm, e.g. about 3 mm.

In this way, the head of the rotary member is able to work on the entire mixing volume substantially intercepting all the contents of the container during the extemporaneous preparation of a slush, a sorbet or a drink.

Preferably, the container is provided with an access mouth to the mixing volume.

Further characteristics and advantages of the present description will become clearer from the following detailed description of the preferred embodiments thereof, with reference to the appended drawings and provided by way of indicative and non-limiting example, wherein:

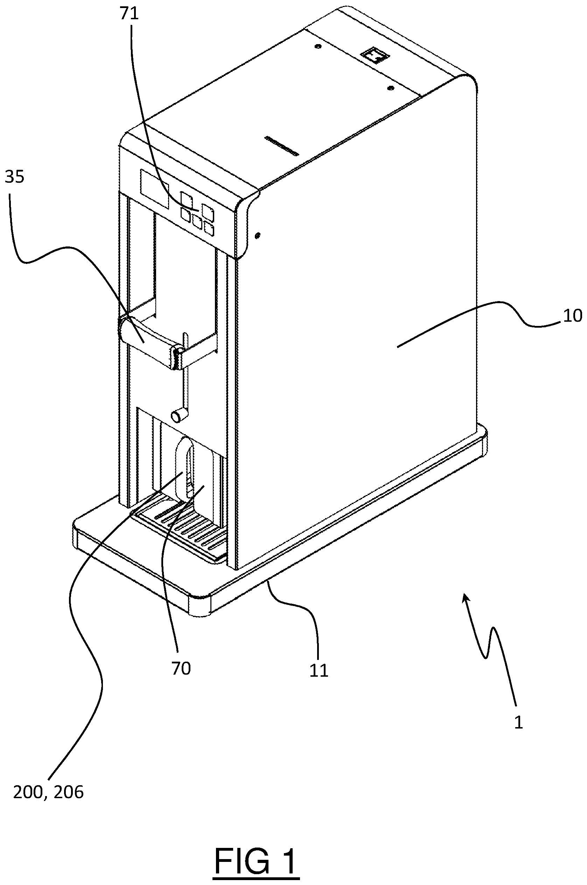

- figure 1 shows a device for the extemporaneous preparation of a slush, sorbet or drink according to the present invention;

- figure 2 shows a partially sectional front view of the device of figure 1 in a first operating condition;

- figure 3 represents the device of figure 2 in a second operating condition;

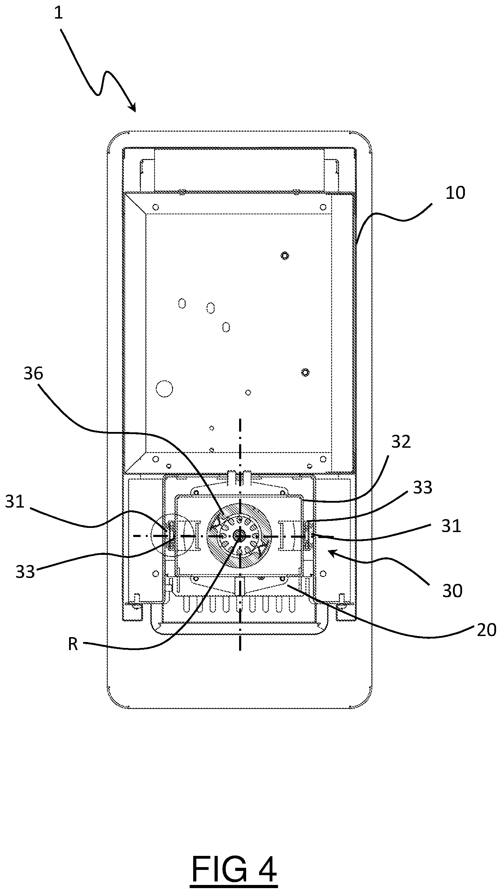

- figure 4 shows a partially sectional view from above of the device of figure 1;

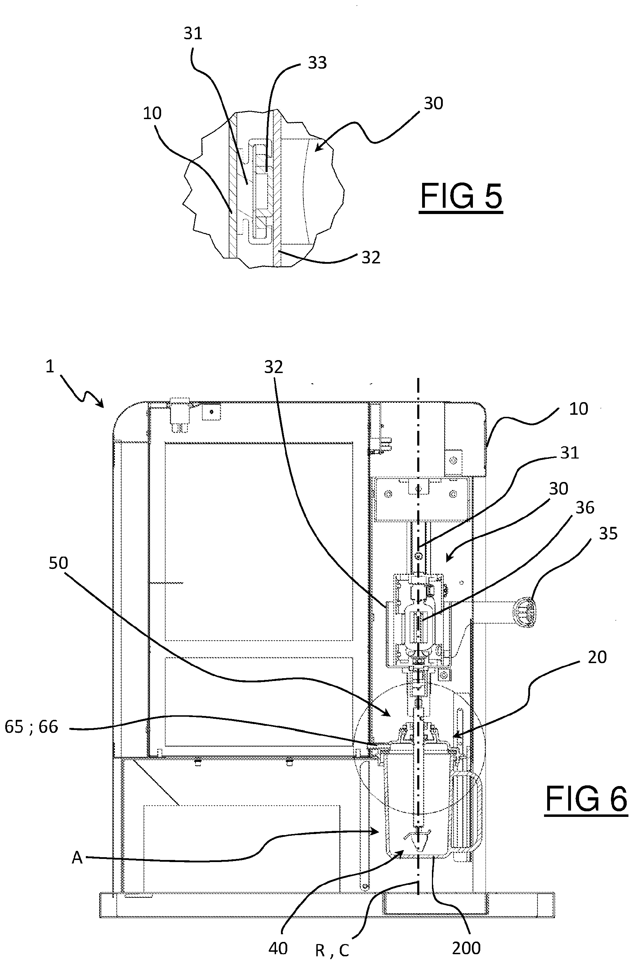

- figure 5 shows an enlarged detail of the device of figure 4;

- figure 6 shows a lateral sectional view of the device of figure 1;

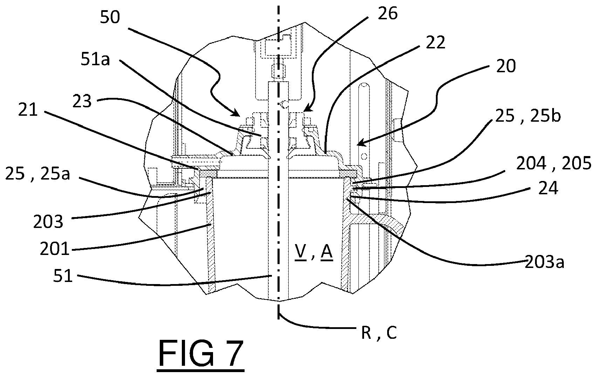

- figure 7 shows an enlarged detail of the device of figure 6;

- figure 8 shows a detail of the device of figure 2;

- figure 9 shows a container of the device of figure 1;

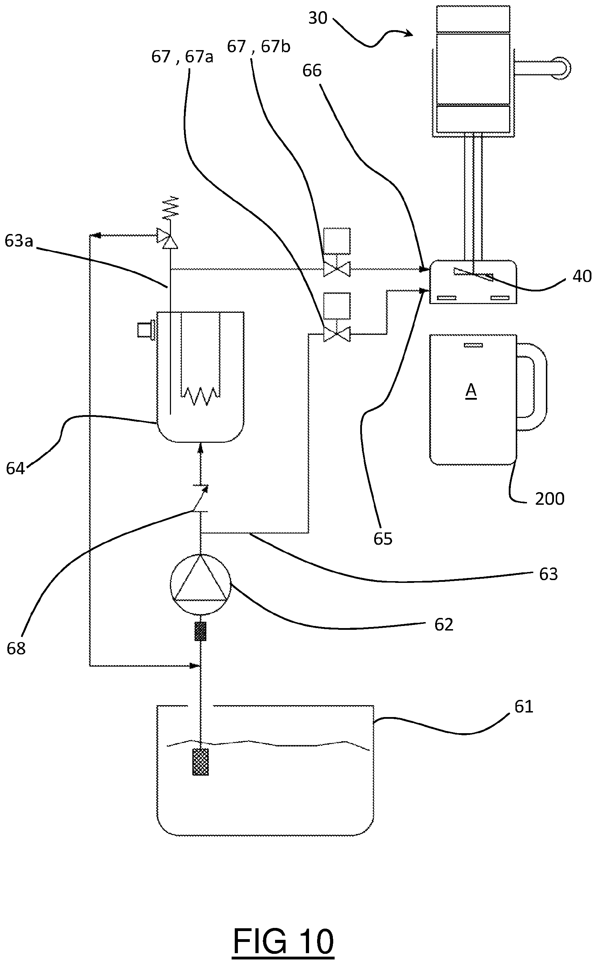

- figure 10 schematically shows some components of the device of figure 1; and

- figure 11 shows a block diagram of a possible embodiment of a process for manufacturing pieces of frozen aerated semi-finished food product.

A device for the extemporaneous preparation of a slush, sorbet or drink according to the present invention is illustrated in the appended figures where it is generally indicated by reference number 1 and hereinafter referred to by the abbreviated notation "device 1".

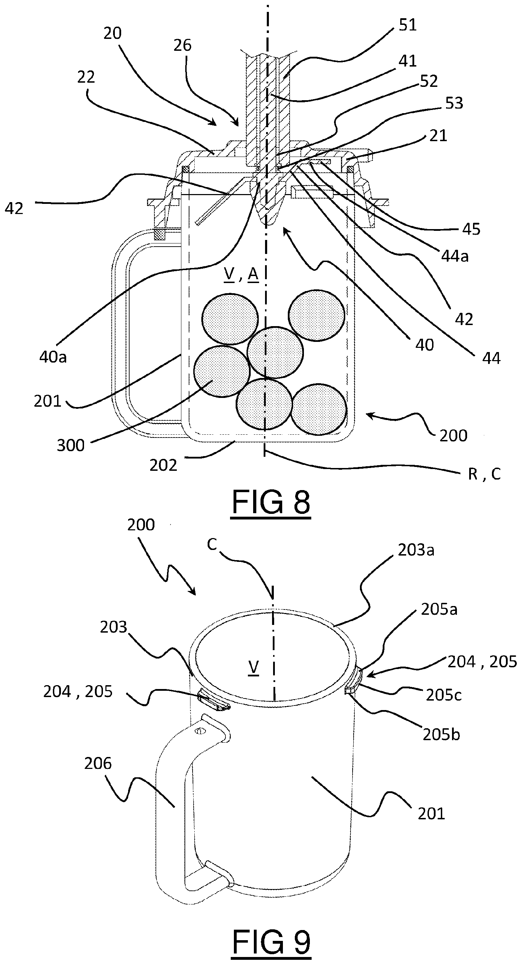

The preferred embodiment of the device 1 is configured to mechanically process loose pieces of frozen aerated semi-finished food product 300 (illustrated schematically in figure 8) and a liquid.

The device 1 is used in combination with a container 200, better illustrated in figure 9, appropriately shaped to be coupled to the device 1.

The container 200 has a substantially cylindrical shape and comprises a lateral wall 201 and a substantially flat bottom wall 202. The container 200 has a substantially cylindrical or slightly truncated cone shaped mixing volume V, having a cylindrical axis C of symmetry and laterally delimited by the lateral wall 201 and at the base by the bottom wall 202. The lateral wall 201 has an access mouth 203 to the mixing volume V, arranged in the opposite position to the bottom wall 202 with respect to the mixing volume V. The mouth 203 has a circular upper edge 203a.

The container 200 further comprises a connection portion 204 arranged at the mouth 203. The connection portion 204 comprises three projections 205, arranged circumferentially about the cylindrical axis C. The projections 205 extend at the mouth 203 of the container 200 away from the cylindrical axis C. Each projection 205 has a flat upper face 205a, a flat lower face 205b and a curved outer face 205c. The upper faces 205a of the projections 205 all lie on a first radial plane with respect to the cylindrical axis C. Likewise, the lower faces 205b all lie on a second radial plane parallel to the first radial plane and the outer faces 205c all lie on a cylindrical plane coaxial to the cylindrical axis C.

A handle 206 is connected to the lateral wall 201 to enable the container 200 to be manually supported.

The device 1 comprises a support frame 10 which has a support base 11 shaped to support the device 1 so as to keep it stable in its use configuration.

A positioning member 20 is integral with the support frame 10. In the embodiment illustrated, the positioning member 20 is positioned in a cantilever configuration with respect to the support frame 10 and projects radially away from the support frame 10.

A preparation area A is defined, along an axial direction, below the positioning member 20, above the support base 11.

The positioning member 20 comprises a coupling portion 21, facing the preparation area A and that can be coupled to the container 200 to enable the positioning thereof in the preparation area A.

The coupling portion 21 can be coupled to the connection portion 204 of the container 200 so as to enable a stable and reversible connection of the latter to the device 1.

The coupling portion 21 is configured to maintain the container 200 in the preparation area A, in a raised position with respect to the support base 11, with the cylindrical axis C oriented according to an axial direction and the mouth 203 facing towards the coupling portion 21.

The coupling portion 21 comprises an occlusion wall 22 configured to receive and occlude the mouth 203 of the container 200. The occlusion wall 22 has a flat circular occlusion surface 23, facing towards the preparation area A so as to delimit in the axial direction the mixing volume V when the container 200 is connected to the coupling portion 21. The occlusion wall 22 further has a substantially cylindrical guide surface 24, which surrounds the occlusion surface 23 and which is substantially counter-shaped to the mouth 203 of the container 200. An annular gasket is arranged at the guide surface 24 so as to be arranged in abutment against the circular edge 203a of the mouth 203 for sealing the mixing volume V when the container 200 is connected to the coupling portion 21.

In the embodiment illustrated, the coupling portion 21 comprises three L-shaped grooves 25 arranged at the guide surface 24 and facing towards the axis of rotation R. Each groove 25 is configured to receive a projection 205 of the container 200 and has an axial portion 25a and a circumferential portion 25b with an arched shape. The axial portion 25a is shaped to enable the axial sliding of the respective projection 205 during an axial insertion of the container 200 into the coupling portion 21. The circumferential portion 25b is shaped to enable the circumferential sliding of the projection 205 during a rotation of the container 200 in the coupling portion 21.

The occlusion wall 22 has a through hole 26, arranged at the centre of the occlusion surface 23 and extending in the axial direction through the positioning member 20.

A movement kinematic mechanism 30 is connected to the support frame 10, in the axially opposite position to the preparation area A with respect to the positioning member 20.

The movement kinematic mechanism 30 comprises two guides 31 with an axial extension stably connected to the support frame 10. The movement kinematic mechanism 30 further comprises a slidable carriage 32 provided with a plurality of sliding blocks 33 slidably engaged in the guides 31. The sliding blocks 33 enable the slidable carriage 32 to translate axially along the guides 31 with respect to the positioning member 20, away from and towards the preparation area A.

The movement kinematic mechanism 30 further comprises an elastic return member not illustrated, e.g. a spring, having a first end connected to the slidable carriage 32 and a second end connected to the support frame 10, for exercising an axial force on the slidable carriage 32 directed away from the preparation area A. The elastic return member tends to retain the slidable carriage 32 axially distant from the positioning member 20.

A handgrip 35 is integral with the slidable carriage 32 for enabling an operator to axially move the slidable carriage 32 in opposition to the elastic return member, for moving the slidable carriage 32 towards and away from the preparation area A.

A rotary member 40 comprises an electric motor 36 and a head 40a placed in rotation by the electric motor 36.

The electric motor 36 has a rotary drive shaft having an axially oriented axis of rotation R. The electric motor 36 has a rotation speed when idle (i.e. when no resistant load is applied) comprised between about 3000 rpm and 8000 rpm, more preferably comprised between about 4000 and 7000 rpm, even more preferably about 5800 rpm. The electric motor 36 has a rotation speed in operating conditions (i.e. when it operates on the preparation) comprised between about 2000 rpm and 7000 rpm, more preferably comprised between about 3000 and 6000 rpm, even more preferably about 4800 rpm. The electric motor 36 is of the brushless type in direct current provided with a modulator configured to receive a direct current supply.

The rotary member 40 further comprises a rotary shaft 41 with an axial extension, having a first end connected to the head 40a and a second end connected to the rotary drive shaft of the electric motor 36. The rotary shaft 41 and the drive shaft of the electric motor 36 may be a single part or two physically distinct elements made integral with one another. The rotary drive shaft, the rotary shaft 41 and the head 40a are aligned with respect to the axis of rotation R and are rotatable about it in a mutually integral way.

The head 40a of the rotary member 40 comprises a plurality of blades 42 (two in the preferred embodiment of the invention) arranged radially about the axis of rotation R.

The rotary shaft 41 of the rotary member 40 is inserted slidably into the hole 26 of the occlusion wall 22 so that the head 40a is arranged in the preparation area A and the electric motor 36 is arranged outside the preparation area A. In particular, the electric motor 36 is positioned on the opposite side of the preparation area A with respect to the positioning member 20.

The rotary member 40 is connected to the movement kinematic mechanism 30 for being able to be moved axially with respect to the preparation area A. On this point, the electric motor 36 is stably connected to the slidable carriage 32 and moves integrally with the slidable carriage 32.

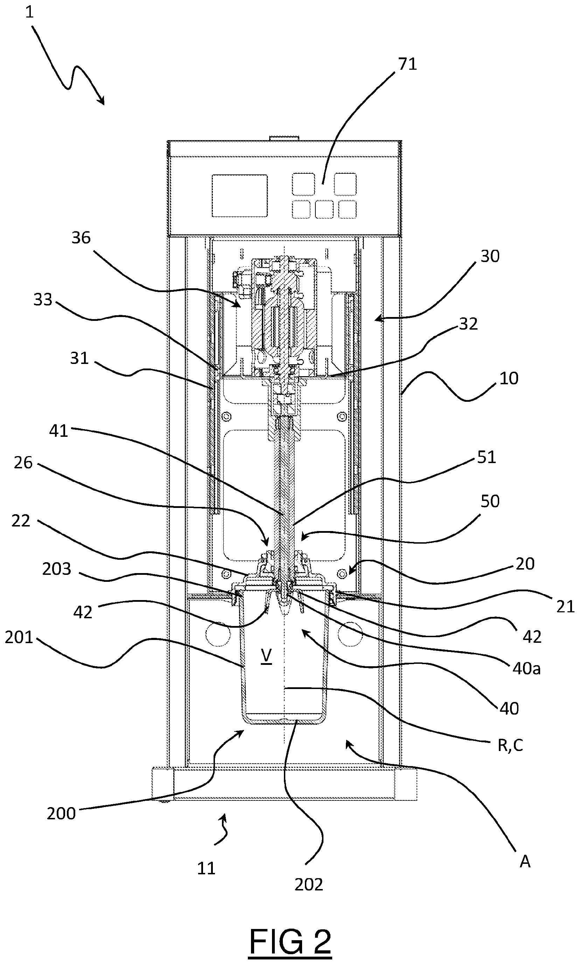

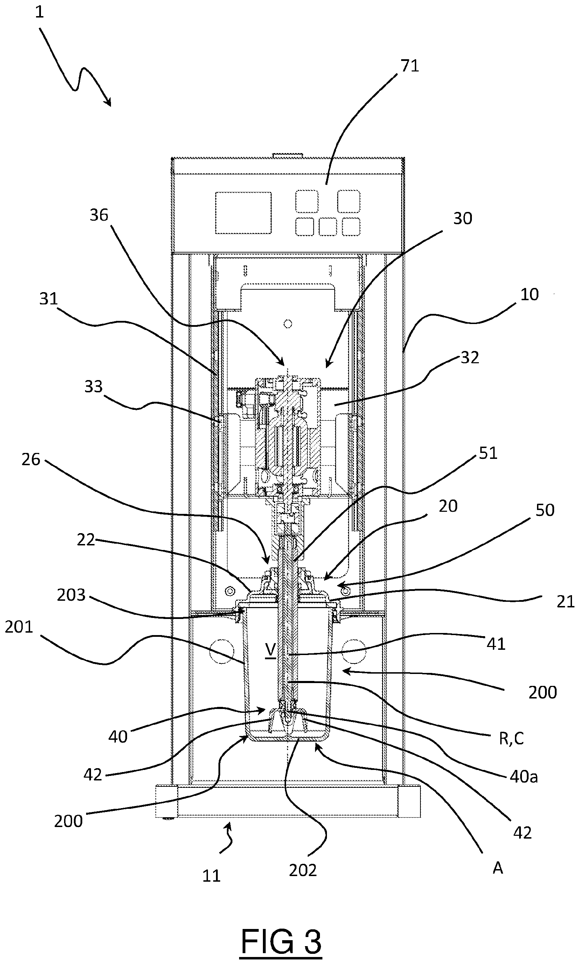

The movement kinematic mechanism 30 enables the rotary member 40 to be moved axially between a first axial position, illustrated in figure 2, and a second axial position, illustrated in figure 3, so that the head 40a can reach mutually different operating conditions inside the preparation area A, each of the operating conditions corresponding to a different degree of insertion of the head 40a within the mixing volume V of the container 200.

A hydraulic sealing system 50 is arranged and shaped so as to seal a gap between the hole 26 and the rotary shaft 41 during rotations and translations of the rotary member 40.

The hydraulic sealing system 50 comprises a sleeve 51 inserted in the hole 26. The sleeve 51 is placed radially externally to the rotary shaft 41 so as to completely surround it. In other words, the rotary shaft 41 is inserted into the sleeve 51. The sleeve 51 and the rotary shaft 41 are integral with one another for translations along an axial direction and are not integral for rotations about the axis of rotation R. The sleeve 51 is integral to the rotary member 40 for translations along the axial direction. The sleeve 51 has a first end facing the preparation area A and a second end fixed to the slidable carriage 32.

The extension in the axial direction of the sleeve 51 is such as to engage the hole 26 in all the axial positions between the first axial position and the second axial position of the rotary member 40. The diameter of the sleeve 51 is slightly smaller than the diameter of the hole 26 so as to be able to slide with respect to the hole 26 without however creating a gap with considerable dimensions with respect thereto. An annular gasket 51a with a lip is made integral with the edge of the hole 26 and contacts the outer surface of the sleeve 51 so that any leakage of fluid between the hole 26 and the sleeve 51 is prevented.

At the first edge of the sleeve 51 there is a bush 52 that acts between the sleeve 51 and the rotary shaft 41 so as to enable the correct rotation of the rotary shaft 41 with respect to the sleeve 51.

A cylindrical bellows 53 is arranged with a first end thereof in abutment against the head 40a of the rotary member 40 and with a second end in abutment against the bush 52. The cylindrical bellows 53 guarantees that between the head 40a, the sleeve 51 and the rotary shaft 41 there cannot be any leaks of fluid.

The rotary member 40 comprises a scraper 45. The scraper 45 comprises a radial extension portion 44a which extends perpendicular to the axis of rotation R and parallel to the occlusion wall 22 and an inclined portion 44 that extends from a first end axially proximal to the axis of rotation R to a second end connected to the radial extension portion 44a. The inclined portion 44 extends towards the occlusion wall 22. The first end of the inclined portion 44 is connected to, or integral with, the first end of the rotary shaft 41. The radial extension portion 44a extends parallel to the occlusion surface 23. The rotary member 40 and the movement kinematic mechanism 30 are shaped so as to arrange the scraper 45 adjacent to the occlusion surface 23 in the first axial position so as to remove material adhering to the occlusion surface 23 during the rotation of the head 40a in the first axial position.

The scraper 45 can also act, as in the embodiment illustrated, as a blade 42.

The blade 42 is inclined so as to be distanced from the axis of rotation R in the oblique direction towards the bottom wall 202 of the container 200 when the latter is coupled to the coupling portion 21. In the second axial position, one end of such blade 42 is arranged in a substantially adjacent position to the bottom wall 202 of the container 200.

Given a first maximum dimension of the mixing volume V of the container 200 measured on a radial plane, corresponding to the cylindrical radius of the mixing volume V, and a second maximum dimension of the rotary member 40, corresponding to the radial extension of the blades 42 with respect to the axis of rotation R, the difference between the first maximum dimension and the second maximum dimension is equal to about 3 mm. Such difference is substantially equal to the gap that is created between the end of the blades 42 and the lateral wall 201 of the container 200, when the latter is connected to the coupling portion 21.

The rotary member 40 can rotate and simultaneously translate between different operating conditions within the mixing volume V. Each operating condition corresponds to a different axial position with respect to the preparation area A. By rotating and translating between the different operating conditions, the blades 42 grind the loose pieces of frozen aerated semi-finished food product 300 mixing them with, and possibly dissolving them in, the liquid contained in the container 200 and intercepting the parts of product thus obtained adhering to the lateral wall 201 and to the occlusion surface 23 so as not to interrupt the processing thereof.

The device 1 further comprises a dispensing system configured to introduce a liquid, in particular water, into the container 200.

The dispensing system comprises a source of liquid 61.

The source of liquid 61 comprises a water tank integrated into the support frame 10. Alternatively, the source of liquid may comprise a connector configured to receive water from a water grid.

The dispensing system further comprises a pump 62 connected to the source of liquid 61. A first fluid supply line 63 is connected to the pump 62 so as to collect liquid from the source of liquid 61 and send it to the first fluid supply line 63.

The first fluid supply line 63 has an inlet connected to the pump 62 and an outlet connected to a first dispensing nozzle 65.

The first nozzle 65 is arranged at the occlusion wall 22, on the side facing towards the occlusion surface 23, and is configured to introduce liquid into the container 200 coupled to the coupling portion 21.

A second fluid supply line 63a is connected to the pump 62 so as to collect liquid from the source of liquid 61 and send it to the second fluid supply line 63a.

The second fluid supply line 63a has an inlet connected to the pump 62 and an outlet connected to a second dispensing nozzle 66.

The second nozzle 66 is arranged at the occlusion wall 22, on the side facing towards the occlusion surface 23, and is configured to introduce liquid into the container 200 coupled to the coupling portion 21.

An electrically operated heater 64 is placed along the second fluid supply line 63a to heat the liquid directed to the second nozzle 66.

Solenoid valves 67 are configured to selectively send, through the pump 62, a first flow of liquid at room temperature to the first nozzle 65 without passing through the heater 64, or a second flow of liquid to the second nozzle 66 through the heater 64, so as to heat the liquid.

In the embodiment illustrated, the solenoid valves 67 comprise a first solenoid valve 67a active on the first fluid supply line 63 upstream of the first nozzle 65 and a second solenoid valve 67b active on the second fluid supply line 63a upstream of the second nozzle 66.

The dispensing system further comprises a check valve 68 for preventing the return of hot liquid from the heater 64 towards the source of liquid 61.

The device 1 further comprises a control interface 71 electrically connected to the pump 62, to the solenoid valves 67, to the heater 64 and to the electric motor 36 to enable an operator to set the operating parameters of the dispensing system and of the rotary member 40.

The control interface has different pre-set methods of dispensing liquid, which include a dispensing mode at room temperature, a dispensing mode at high temperature, a washing mode at room temperature and a washing mode at high temperature.

In the dispensing mode at room temperature the pump 62 is set to dispense a predetermined quantity of liquid and the solenoid valves 67 are configured to direct the liquid through the first nozzle 65, bypassing the heater 64 (which remains deactivated), and the second nozzle 66 so as to keep the liquid dispensed at room temperature. Specifically, the first solenoid valve 67a is open and the second solenoid valve 67b is closed.

In the high temperature dispensing mode the pump 62 is set to dispense a predetermined quantity of hot liquid and the solenoid valves 67 are configured to convey the liquid through the heater 64 and the second nozzle 66, whereas the heater 64 is activated and configured to heat the liquid (e.g. to about 75°C). Specifically, the first valve 67a is closed and the second valve 67b is open.

In the washing mode at room temperature and at high temperature the solenoid valves 67 and the heater 64 are activated with the same modes as the respective dispensing modes and the control interface enables the activation duration of the pump 62 to be regulated in order to regulate the washing duration.

In the two water washing modes the water, respectively at room temperature or at a temperature comprised between 60°C and 75°C, is introduced from the first nozzle 65 or from the second nozzle 66 towards the blades 42 and the container 200 in order to rinse them.

The device 1 further comprises a protection element 70, comprising a wall connected slidably to the positioning member 20 and movable manually by the operator in the axial direction between an engagement position and a disengagement position. In the engagement position the protection element 70 prevents the operator from accessing the preparation area A, and in a disengagement position the protection element 70 enables the operator to access the preparation area A. A magnetic sensor is associated with the protection element 70 and is configured to detect the engagement position and the disengagement position thereof. The control interface is configured to prevent the activation of the rotary member 40 when the protection element 70 is not in the engagement position.

With reference to the device 1 described above, a preferred embodiment of a method for the extemporaneous preparation of a fruit and/or vegetable based slush, sorbet or drink according to the present invention will now be illustrated.

In a first step, the method for the extemporaneous preparation of a slush, a sorbet or a drink envisages inserting into the container 200 a plurality of loose pieces of frozen aerated semi-finished food product 300.

The container 200 is thereafter associated with the positioning member 20 with the loose pieces of frozen aerated semi-finished food product 300 contained therein according to the methods described above.

Then the first nozzle 65 or the second nozzle 66 are activated according to the type of product to be obtained. In particular, by activating the first nozzle 65 a semi-solid product (a slush or a sorbet) is prepared and by activating the second nozzle 66 a liquid product is prepared in the form of a more or less dense drink.

By activating the dispensing mode at room temperature, water is fed at room temperature into the container 200 in order to make a preparation of the slush or sorbet type. In fact, the temperature of the water is not such as to enable during the grinding performed by the blades 42 of the rotary member 40 the loose pieces of frozen aerated semi-finished food product 300 to be completely dissolved.

By activating the high temperature dispensing mode, water is introduced at a temperature higher than room temperature (e.g. at about 75°C) into the container 200 in order to make a drink or "smoothie" type preparation. In fact, in this case, the temperature of the water is such as to enable during the grinding performed by the blades 42 of the rotary member 40, the loose pieces of frozen aerated semi-finished food product 300 in the liquid to be dissolved so as to obtain a more or less dense drink.

The activation of the first nozzle 65 or of the second nozzle 66 is performed according to the methods described above.

Once liquid has been introduced in a predefined quantity into the container 200, the rotary member 40 is activated and moved cyclically between the first and the second axial position and between the second and the first axial position inside the container 200 for a predetermined time.

The blades 42 (and the scraper 54) of the rotary member agitate and mix the contents of the container 200.

At the end of the grinding and possible dissolution of the loose pieces of semi-finished product 300, the rotary member 40 is brought back into the first axial position and the container 200 is removed from the positioning member 20.

The food product contained in the container 200 can be poured into one or more cups to be served to consumers.

Optionally, once the container 200 has been emptied, it can be coupled, empty or with product residues, to the positioning member 20 to activate a washing cycle.

During the washing cycle the operations of introducing water at room temperature or at a temperature higher than room temperature are performed (respectively activating the first nozzle 65 or the second nozzle 66) and of the cyclic activation of the rotary member 40 between the first and the second axial position and between the second axial position and the first axial position.

This enables all traces of product to be removed both from the container 200 and from all the members of the device 1 that have come into contact with the product itself.

A new preparation cycle can therefore be restarted.

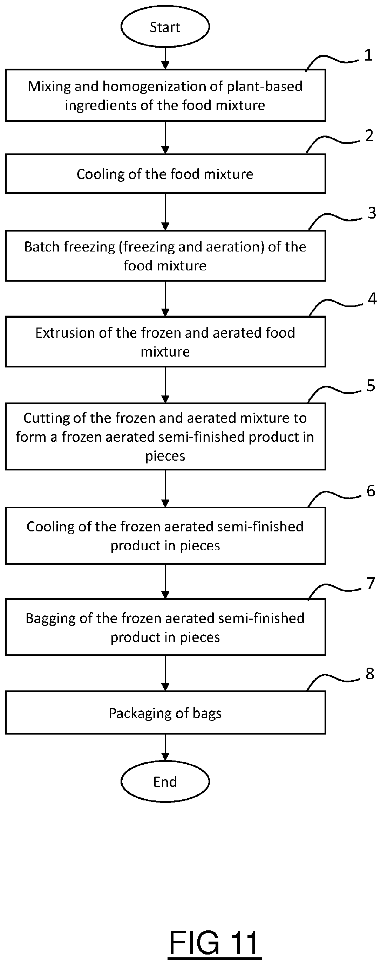

With reference to the block diagram illustrated in figure 11, a possible process for the manufacturing of loose pieces of frozen aerated semi-finished food product 300 is described, which can be used in the preparation method of the present invention.

**Example 1**

A food mixture comprising fruit and/or vegetable purée and/or juice is initially obtained (block 1) starting from a plurality of ingredients, comprising different plant-based raw materials in the form of purée and/or juice, with a suitable diluent liquid, e.g. water.

The first raw materials, initially at a temperature of about 0-10°C, are mixed in an industrial dissolver with water at about 20°C for about 60 seconds, until a homogeneous food mixture is obtained.

After mixing, the food mixture thus blended is cooled (block 2) in a cooling cell thermostated to a temperature of about 0-5°C.

Typical values of the composition of the homogeneous food mixture are indicated in

Table 1.

*Table 1 - Composition of food mixture*

| Ingredients of food mixture | Quantity of ingredients [% by weight] | Solid residue [% by weight] | Sucrose [% by weight] | Glucose [% by weight] | Fructose [% by weight] | Tot. Simple sugars [% by weight] | Water [% by weight] |
|---|---|---|---|---|---|---|---|
| Spirulina | 0.04-0.06 | 0.04-0.05 | 0.00 | 0.00 | 0.00 | 0.00 | 0.00 |
| Concentrated apple juice | 12.96-18.63 | 8.77-12.61 | 0.49-0.71 | 2.15-3.09 | 3.56-5.12 | 6.22-8.93 | 4.19-6.02 |
| Lime juice | 1.2 -1.73 | 0.76-1.09 | 0.00 | 0.08-0.12 | 0.07-0.11 | 0.18-0.27 | 0.44-0.63 |
| Apple purée | 25.60-36.80 | 4.51-6.48 | 0.00 | 0.87-1.25 | 1.66-2.39 | 2.53-3.64 | 21.09-30.32 |
| Avocado flesh | 2.88-4.14 | 0.66-0.95 | 0.00 | 0.03-0.04 | 0.009-0.012 | 0.05-0.07 | 2.22-2.19 |
| Kiwi purée | 26.88-38.64 | 4.14-5.95 | 0.00 | 1.21-1.74 | 1.21-1.74 | 2.42-3.48 | 22.74-32.69 |
| Water | 0.00-30.44 | - | - | - | - | - | 0.00-30.44 |
| Total | 100.00 | 18.88-27.14 | 0.49-0.71 | 4.34-6.24 | 6.52-9.37 | 11.41-16.40 | 81.12-72.86 |

The blended food mixture is transferred (block 3) into a continuous freezer for batch freezing, inside which it is frozen at a temperature comprised between about -4° and -8.5°C, and aerated with an air flow rate comprised between 5 and 25 l/h for 100 l/h, so as to obtain an overrun comprised between 5 and 25%.

The following Table 2 shows the typical values of the plant-based purée at the inlet to the continuous freezer (PS), of the specific weight of the frozen and aerated plant-based purée at the outlet from the continuous freezer (PSaer) and of the relative overrun value (OV) obtained by means of the batch freezing operation.

*Table 2 - Specific weights and overrun*

| Food mixture | PS [g/ml] | PS$_{aer}$ [g/ml] | OV[%] |
|---|---|---|---|
| Example 1 | 1.04-1.08 | 0.90-0.99 | 5-20.1 |

The homogeneous food mixture thus frozen and aerated is then fed conventionally (block 4) to an extrusion head and the extruded purée at the outlet from the extruder is cut (block 5) using a wire heated to 40°C, obtaining substantially cylindrical pieces of frozen aerated semi-finished food product having the following typical size and weight values:

- length: about 12-16 mm;
- diameter: about 14-16 mm;
- weight: about 1.8-3.2 g.

The semi-finished product in pieces is then cooled (block 6) to a temperature of about - 39°/-40°C for about 20-21 minutes by transfer within a cooling tunnel.

Finally (block 7), the semi-finished product in loose pieces is packaged in a controlled temperature environment of about -10°C through a multi-head packaging machine and split into bags of a predetermined weight.

The bags are then manually boxed (block 8) and transferred to the warehouse for storage while waiting for distribution.

**Example 2**

A frozen aerated semi-finished food product in substantially cylindrical pieces similar to those of Example 1 was obtained by means of the same process described above with reference to Example 1 and illustrated schematically in FIG. 11, but starting from a different initial composition of the food mixture and setting the air flow in the continuous freezer so as to obtain an overrun comprised between 5 and 25% in the final semi-finished product.

The composition of the food mixture used is indicated in Table 3.

*Table 3 - Composition of food mixture*

| Ingredients of food mixture | Quantity of ingredients [% by weight] | Solid residue [% by weight] | Sucrose [% by weight] | Glucose [% by weight] | Fructose [% by weight] | Tot. Simple sugars [% by weight] | Water [% by weight] |
|---|---|---|---|---|---|---|---|
| Pineapple juice | 5.60-7.13 | 3.62-4.61 | 0.00 | 0.66-0.96 | 0.64-0.81 | 3.15-4.00 | 1.98-2.52 |
| Concentrated apple juice | 8-10.18 | 5.42-6.89 | 0.30-0.39 | 1.33-1.69 | 2.20-2.80 | 3.84-4.88 | 2.58-3.29 |
| Banana purée | 24-30.54 | 6.72-8.55 | 0.55-0.70 | 1.18-1.50 | 1.16-1.48 | 4.50-5.73 | 17.28-21.99 |
| Coconut purée | 21.76-27.69 | 4.94-6.28 | 0.00 | 0.00 | 0.47-0.60 | 0.47-0.60 | 16.82-21.41 |
| Pineapple purée | 15.36-19.55 | 2.07-2.64 | 0.92-1.17 | 0.27-0.34 | 0.33-0.41 | 1.84-2.35 | 13.29-16.91 |
| Aloe vera | 3.84-4.89 | 0.02-0.025 | 0.00 | 0.00 | 0.00 | 0.00 | 3.82-4.86 |
| Water | 0.02-21.44 | - | - | - | - | - | 0.02-21.44 |
| **Total** | 100.00 | 22.79-29.00 | 1.78-2.26 | 3.53-4.49 | 4.80-6.10 | 13.80-17.56 | 77.21-71 |

The following Table 4 shows the specific weight of the homogeneous food mixture plant-based purée at the inlet to the continuous freezer (PS), the specific weight of the frozen and aerated homogeneous food mixture ($PS_{aer}$) and the related overrun value (OV) obtained by means of the batch freezing operation.

*Table 4 - Specific weights and overrun*

| Food mixture | PS [g/ml] | $PS_{aer}$ [g/ml] | OV[%] |
|---|---|---|---|
| **Example 2** | 1.05-1.09 | 0.90-0.99 | 5.9-21.2 |

**Example 3**

A frozen aerated semi-finished food product in substantially cylindrical pieces similar to those of Example 1 was obtained by means of the same process described above with reference to Example 1 and illustrated schematically in FIG. 11, but starting from a different initial composition of the food mixture and setting the air flow in the continuous freezer so as to obtain an overrun comprised between 5 and 25% in the final semi-finished product.

The composition of the food mixture used is indicated in Table 5.

*Table 5 - Composition of food mixture*

| Ingredients of food mixture | Quantity of ingredients [% by weight] | Solid residue [% by weight] | Sucrose [% by weight] | Glucose [% by weight] | Fructose [% by weight] | Tot. Simple sugars [% by weight] | Water [% by weight] |
|---|---|---|---|---|---|---|---|
| Concentrated lemon juice | 0.88-1.32 | 0.36-0.54 | 0.00 | 0.058-0.087 | 0.050-0.084 | 0.11-0.16 | 0.52-0.78 |
| Concentrated apple juice | 14.72-22.08 | 9.97-14.95 | 0.56-0.84 | 2.44-3.67 | 4.05-6.07 | 7.06-10.59 | 4.75-7.13 |
| Apple purée | 12.8-19.20 | 2.25-3.38 | 0.00 | 0.44-0.65 | 0.83-1.25 | 1.27-1.90 | 10.55-15.82 |
| Papaya purée | 6.88-10.32 | 0.87-1.31 | 0.00 | 0.32-0.49 | 0.23-0.34 | 0.62-0.93 | 6.01-9.01 |
| Mango flesh | 28.16-42.24 | 5.41-8.11 | 2.10-3.14 | 0.60-0.90 | 1.41-2.11 | 4.11-6.17 | 22.75-34.13 |
| Carrot purée | 1.60-2.40 | 0.16-0.24 | 0.06-0.09 | 0.009-0.013 | 0.009-0.013 | 0.08-0.12 | 1.44-2.16 |
| Water | 2.44-34.96 | - | - | - | - | - | 2.44-34.96 |
| **Total** | 100.00 | 19.01-28.52 | 2.72-4.07 | 3.87-5.80 | 6.57-9.86 | 13.25-19.87 | 80.99-71.48 |

The following Table 6 shows the specific weight of the homogeneous food mixture at the inlet to the continuous freezer (PS), the specific weight of the frozen and aerated homogeneous food mixture ($PS_{aer}$) and the related overrun value (OV) obtained by means of the batch freezing operation.

*Table 6 - Specific weights and overrun*

| Food mixture | PS [g/ml] | $PS_{aer}$ [g/ml] | OV[%] |
|---|---|---|---|
| **Example 3** | 1.05-1.09 | 0.90-0.99 | 5.9-21.2 |

**Example 4**

A frozen aerated semi-finished food product in substantially cylindrical pieces similar to those of Example 1 was obtained by means of the same process described above with reference to Example 1 and illustrated schematically in FIG. 11, but starting from a different initial composition of the food mixture and setting the air flow in the continuous freezer so as to obtain an overrun comprised between 5 and 25% in the final semi-finished product.

The composition of the food mixture used is indicated in Table 7.

*Table 7 - Composition of food mixture*

| Ingredients of food mixture | Quantity of ingredients [% by weight] | Solid residue [% by weight] | Sucrose [% by weight] | Glucose [% by weight] | Fructose [% by weight] | Tot. Simple sugars [% by weight] | Water [% by weight] |
|---|---|---|---|---|---|---|---|
| Concentrated apple juice | 14-19.25 | 9.48-13.03 | 0.53-0.73 | 2.324-3.196 | 3.85-5.29 | 6.71-9.23 | 4.52-6.22 |
| Apricot purée | 19.20-26.4 | 2.17-2.98 | 0.52-0.71 | 0.00 | 0.54-0.74 | 1.06-1.45 | 17.03-23.42 |
| Apple purée | 6.40-8.80 | 1.13-1.55 | 0.00 | 0.218-0.299 | 0.42-0.57 | 0.63-0.87 | 5.27-7.25 |
| Yellow peach purée | 32.0-44.0 | 3.20-4.40 | 0.83-1.14 | 0.320-0.444 | 0.67-0.92 | 1.82-2.51 | 28.8-39.60 |
| Water | 1.55-28.40 | 0.00 | 0.00 | 0.00 | 0.00 | 0.00 | 1.55-28.40 |
| **Total** | 100.00 | 15.97-21.96 | 1.88-2.59 | 2.862-3.935 | 5.48-7.53 | 10.23-14.06 | 84.03-78.04 |

The following Table 8 shows the specific weight of the homogeneous food mixture at the inlet to the continuous freezer (PS), the specific weight of the frozen and aerated homogeneous food mixture ($PS_{aer}$) and the related overrun value (OV) obtained by means of the batch freezing operation.

*Table 8 - Specific weights and overrun*

| Food mixture | PS [g/ml] | $PS_{aer}$ [g/ml] | OV[%] |
|---|---|---|---|
| **Example 4** | 1.05-1.09 | 0.90-0.99 | 5.9-21.2 |

**Claims**

1. Method for the extemporaneous preparation of a fruit and/or vegetable based slush, sorbet or drink, comprising the steps of:

a) inserting into a container (200) associated with a device (1) for the extemporaneous preparation of a slush, a sorbet or a drink, loose pieces of a frozen aerated semi-finished food product (300) based on fruit and/or vegetables,

b') feeding a dosed quantity of liquid at room temperature into the container (200) through a first dispensing nozzle (65) of said device (1), and

c') grinding the loose pieces of frozen aerated semi-finished food product (300) in the liquid at room temperature by means of a rotary member (40) of said device (1) so as to prepare a slush or a sorbet, or

b") feeding a dosed quantity of liquid at a higher temperature than room temperature into the container (200) through a second dispensing nozzle (66) of said device (1), and

c") dissolving the loose pieces of frozen aerated semi-finished food product (300) in the liquid at a higher temperature than room temperature by means of said rotary member (40) of said device (1) so as to prepare a drink,

wherein the loose pieces of frozen aerated semi-finished food product (300) comprise a quantity of simple sugars deriving from simple sugars naturally present in said fruit and/or vegetables comprised between 10 and 30 g/100g of the semi-finished product and an overrun comprised between 5 and 35%, preferably between 5 and 25%.

2. Method according to claim 1, wherein inserting into the container (200) the loose pieces of frozen aerated semi-finished food product (300) precedes feeding into the container (200) said dosed quantity of liquid.

3. Method according to claim 1 or 2, comprising associating the container (200), with the loose pieces of frozen aerated semi-finished food product (300) inserted therein, to a positioning member (20) of said device (1) configured to retain the container (200) and occlude an insertion mouth (203) of the container (200).

4. Method according to claim 1, comprising heating the liquid, preferably to a temperature comprised between 60 and 75°C, preferably comprised between 70 and 75°C, even more preferably of about 75°C before feeding it into the container (200) according to step b").

5. Method according to any one of the preceding claims, wherein c') grinding or c") dissolving in the container (200) the loose pieces of frozen aerated semi-finished food product in the liquid comprises moving a head (40a) of said rotary member (40) between a plurality of axial positions inside the container (200).

6. Method according to any one of the preceding claims, wherein each piece of frozen aerated semi-finished food product (300) has a maximum length comprised between 11 and 18 mm, preferably comprised between 12 and 16 mm and/or a weight comprised between 1.4 and 3.8 g, preferably comprised between 1.8 and 3.2 g.

7. Device (1) for the extemporaneous preparation of a fruit and/or vegetable based slush, sorbet or drink, comprising:

   a support frame (10);
   a container (200);
   a positioning member (20) connected to the support frame (10) configured to position the container (200) in a preparation area (A);
   a first nozzle (65) for dispensing a liquid placed at the positioning member (20) and configured to introduce liquid at room temperature into the container (200);
   a second nozzle (66) for dispensing a liquid placed at the positioning member (20) and configured to introduce liquid at a higher temperature than room temperature into the container (200);
   a rotary member (40), slidably coupled in an axial direction to the positioning member (20) and movable with respect to the positioning member (20) between a first axial position and a second axial position;
   a movement kinematic mechanism (30) operatively connected between the positioning member (20) and the rotary member (40) to move the rotary member (40) with respect to the positioning member (20) between the first axial position and the second axial position;
   wherein the rotary member (40) comprises a head (40a) pivoting around an axial axis of rotation (R) and movable in a plurality of operating conditions in the preparation area (A), and wherein each operating condition of the plurality of operating conditions of the head (40a) of the rotary member (40) corresponds to a different axial position of the rotary member (40) with respect to the preparation area (A) between the first axial position and the second axial position.

8. Device (1) according to claim 7, wherein said positioning member (20) comprises a coupling portion (21) configured to retain the container (200) comprising an occlusion wall (22) facing towards the preparation area (A) and configured to occlude a mouth (203) of the container (200) when the container (200) is coupled to the coupling portion (21).

9. Device (1) according to claim 8, wherein said first nozzle (65) and said second nozzle (66) are placed at said occlusion wall (22) on the side facing towards the container (200) when it is coupled to the coupling portion (21).

10. Device (1) according to any one of claims 7 to 9, wherein said second nozzle (66) is in fluid communication with a heater (64) for dispensing liquid at a higher temperature than room temperature.

**11.** Device (1) according to claim 10, comprising a pump (62) connected to a source of liquid (61), to a first fluid supply line (63) connected to the first nozzle (65) and to a second fluid supply line (63a) connected to the second nozzle (66); the heater (64) being active along the second fluid supply line (63a).

**12.** Device (1) according to claim 8, wherein said rotary member (40) comprises a scraper (45) configured to remove material adhering to said occlusion wall (22) during a rotation of the rotary member (40) when in the first axial position.

**13.** Device (1) according to claim 12, wherein said scraper (45) comprises a radial extension portion (44a) which extends perpendicular to the axis of rotation (R) and parallel to the occlusion wall (22) and which lies adjacent to said occlusion wall (22) when said rotary member (40) is in the first axial position.

**14.** Device (1) according to claim 13, wherein said scraper (45) comprises an inclined portion (44) which extends from a first end axially proximal to the axis of rotation (R) and a second one connected to the radially extension portion (44a).

**15.** Device (1) according to any one of claims 7 to 14, wherein said positioning member (20) is integral with said support frame (10) and said rotary member (40) is slidably coupled to said support frame (10).


**Patentansprüche**

**1.** Verfahren zur spontanen Zubereitung einer Granita, eines Sorbets oder Getränks auf Frucht- und/oder Gemüsebasis, umfassend die folgenden Schritte:

a) Einfüllen von losen Stücken eines gefrorenen, belüfteten Lebensmittelhalbfabrikats (300) auf Frucht- und/oder Gemüsebasis in einen Behälter (200), der mit einer Vorrichtung (1) zur spontanen Zubereitung einer Granita, eines Sorbets oder Getränks verbunden ist,
b') Zuführen einer dosierten Flüssigkeitsmenge bei Raumtemperatur in den Behälter (200) durch eine erste Ausgabedüse (65) der Vorrichtung (1), und
c') Zerkleinern der losen Stücke des gefrorenen, belüfteten Lebensmittelhalbfabrikats (300) in der Flüssigkeit bei Raumtemperatur mit Hilfe eines Drehelements (40) der Vorrichtung (1), um eine Granita oder ein Sorbet herzustellen, oder
b") Zuführen einer dosierten Flüssigkeitsmenge mit einer höheren Temperatur als Raumtemperatur in den Behälter (200) durch eine zweite Ausgabedüse (66) der Vorrichtung (1), und
c") Auflösen der losen Stücke des gefrorenen, belüfteten Lebensmittelhalbfabrikats (300) in der Flüssigkeit bei einer höheren Temperatur als Raumtemperatur mit Hilfe des Drehelements (40) der Vorrichtung (1), um ein Getränk herzustellen,

wobei die losen Stücke des gefrorenen, belüfteten Lebensmittelhalbfabrikats (300) eine Menge an Einfachzucker umfassen, der aus dem natürlicherweise in der Frucht und/oder dem Gemüse vorhandenen Einfachzucker stammt und zwischen 10 und 30 g/100g des Halbfabrikats und einen Überschuss zwischen 5 und 35 %, vorzugsweise zwischen 5 und 25 %, umfasst.

**2.** Verfahren nach Anspruch 1, wobei das Einfüllen der losen Stücke des gefrorenen, belüfteten Lebensmittelhalbfabrikats (300) in den Behälter (200) vor dem Zuführen der dosierten Flüssigkeitsmenge in den Behälter (200) erfolgt.

**3.** Verfahren nach Anspruch 1 oder 2, umfassend das Verbinden des Behälters (200) mit den losen Stücken des darin eingefüllten gefrorenen, belüfteten Lebensmittelhalbfabrikats (300) mit einem Positionierungselement (20) der Vorrichtung (1), das so konfiguriert ist, dass es den Behälter (200) festhält und eine Einführöffnung (203) des Behälters (200) verschließt.

**4.** Verfahren nach Anspruch 1, umfassend das Erhitzen der Flüssigkeit, vorzugsweise auf eine Temperatur zwischen 60 und 75 °C, vorzugsweise zwischen 70 und 75 °C, noch bevorzugter von etwa 75 °C, bevor sie in den Behälter (200) gemäß Schritt b") eingefüllt wird.

**5.** Verfahren nach einem der vorstehenden Ansprüche, wobei c') das Zerkleinern oder c") das Auflösen der losen Stücke des gefrorenen, belüfteten Lebensmittelhalbfabrikats in der Flüssigkeit in dem Behälter (200) das Bewegen eines Kopfes (40a) des Drehelements (40) zwischen einer Vielzahl von axialen Positionen innerhalb des Behälters (200) umfasst.

**6.** Verfahren nach einem der vorstehenden Ansprüche, wobei jedes Stück eines gefrorenen belüfteten Lebensmittelhalbfabrikats (300) eine maximale Länge zwischen 11 und 18 mm, vorzugsweise zwischen 12 und 16 mm, und/oder ein Gewicht zwischen 1,4 und 3,8 g, vorzugsweise zwischen 1,8 und 3,2 g, aufweist.

**7.** Vorrichtung (1) zur spontanen Zubereitung einer Granita, eines Sorbets oder Getränks auf Frucht- und/oder Gemüsebasis, umfassend:

einen Tragrahmen (10);
einen Behälter (200);
ein Positionierungselement (20), das mit dem Tragrahmen (10) verbunden ist und so konfiguriert ist, dass es den Behälter (200) in einem Zubereitungsbereich (A) positioniert;
eine erste Düse (65) zur Ausgabe einer Flüssigkeit, die an dem Positionierungselement (20) angeordnet und so konfiguriert ist, dass sie Flüssigkeit bei Raumtemperatur in den Behälter (200) einfüllt;
eine zweite Düse (66) zur Ausgabe einer Flüssigkeit, die an dem Positionierungselement (20) angeordnet und so konfiguriert ist, dass sie Flüssigkeit mit einer höheren Temperatur als Raumtemperatur in den Behälter (200) einfüllt;
ein Drehelement (40), das in einer axialen Richtung gleitend mit dem Positionierungselement (20) gekoppelt und in Bezug auf das Positionierungselement (20) zwischen einer ersten axialen Position und einer zweiten axialen Position beweglich ist;
einen Bewegungskinematikmechanismus (30), der zwischen dem Positionierungselement (20) und dem Drehelement (40) wirkverbunden ist, um das Drehelement (40) in Bezug auf das Positionierungselement (20) zwischen der ersten axialen Position und der zweiten axialen Position zu bewegen; wobei das Drehelement (40) einen Kopf (40a) umfasst, der um eine axiale Drehachse (R) schwenkt und in einer Vielzahl von Betriebszuständen in dem Zubereitungsbereich (A) bewegbar ist, und wobei jeder Betriebszustand der Vielzahl von Betriebszuständen des Kopfes (40a) des Drehelements (40) einer unterschiedlichen axialen Position des Drehelements (40) in Bezug auf den Zubereitungsbereich (A) zwischen der ersten axialen Position und der zweiten axialen Position entspricht.

**8.** Vorrichtung (1) nach Anspruch 7, wobei das Positionierungselement (20) einen Kopplungsabschnitt (21) umfasst, der so konfiguriert ist, dass er den Behälter (200) hält, der eine Verschlusswand (22) umfasst, die dem Zubereitungsbereich (A) zugewandt und so konfiguriert ist, dass sie eine Öffnung (203) des Behälters (200) verschließt, wenn der Behälter (200) mit dem Kopplungsabschnitt (21) gekoppelt ist.

**9.** Vorrichtung (1) nach Anspruch 8, wobei die erste Düse (65) und die zweite Düse (66) an der Verschlusswand (22) auf der Seite angeordnet sind, die dem Behälter (200) zugewandt ist, wenn dieser mit dem Kopplungsabschnitt (21) gekoppelt ist.

**10.** Vorrichtung (1) nach einem der Ansprüche 7 bis 9, wobei die zweite Düse (66) in Fluidverbindung mit einem Heizelement (64) zur Ausgabe von Flüssigkeit bei einer höheren Temperatur als Raumtemperatur steht.

**11.** Vorrichtung (1) nach Anspruch 10, umfassend eine Pumpe (62), die mit einer Flüssigkeitsquelle (61), mit einer ersten Flüssigkeitszufuhrleitung (63), die mit der ersten Düse (65) verbunden ist, und mit einer zweiten Flüssigkeitszufuhrleitung (63a), die mit der zweiten Düse (66) verbunden ist, verbunden ist; wobei das Heizelement (64) entlang der zweiten Flüssigkeitszufuhrleitung (63a) aktiv ist.

**12.** Vorrichtung (1) nach Anspruch 8, wobei das Drehelement (40) einen Abstreifer (45) umfasst, der so konfiguriert ist, dass er während einer Drehung des Drehelements (40) in der ersten axialen Position an der Verschlusswand (22) anhaftendes Material entfernt.

**13.** Vorrichtung (1) nach Anspruch 12, wobei der Abstreifer (45) einen radialen Verlängerungsabschnitt (44a) aufweist, der sich senkrecht zur Drehachse (R) und parallel zur Verschlusswand (22) erstreckt und der an die Verschlusswand (22) angrenzt, wenn sich das Drehelement (40) in der ersten axialen Position befindet.

**14.** Vorrichtung (1) nach Anspruch 13, wobei der Abstreifer (45) einen geneigten Abschnitt (44) umfasst, der sich von einem ersten Ende axial proximal zur Drehachse (R) und einem zweiten Ende, das mit dem sich radial erstreckenden Abschnitt (44a) verbunden ist, erstreckt.

**15.** Vorrichtung (1) nach einem der Ansprüche 7 bis 14, wobei das Positionierungselement (20) einstückig mit dem Tragrahmen (10) ausgebildet ist und das Drehelement (40) verschiebbar mit dem Tragrahmen (10) gekoppelt ist.

**Revendications**

1.  Procédé pour la préparation extemporanée d'un granité, d'un sorbet ou d'une boisson à base de fruits et/ou de légumes, comprenant les étapes de :

    a) l'insertion, dans un contenant (200) associé à un dispositif (1) pour la préparation extemporanée d'un granité, d'un sorbet ou d'une boisson, de morceaux en vrac d'un produit alimentaire semi-fini aéré congelé (300) à base de fruits et/ou de légumes,
    b') l'apport d'une quantité dosée de liquide à température ambiante dans le contenant (200) par le biais d'une première buse de distribution (65) dudit dispositif (1), et
    c') le broyage des morceaux en vrac de produit alimentaire semi-fini aéré congelé (300) dans le liquide à température ambiante au moyen d'un organe rotatif (40) dudit dispositif (1) de façon à préparer un granité ou un sorbet, ou b") l'apport d'une quantité dosée de liquide à une température plus élevée que la température ambiante dans le contenant (200) par le biais d'une seconde buse de distribution (66) dudit dispositif (1), et
    c") la dissolution des morceaux en vrac de produit alimentaire semi-fini aéré congelé (300) dans le liquide à une température plus élevée que la température ambiante au moyen dudit organe rotatif (40) dudit dispositif (1) de façon à préparer une boisson,

    dans lequel les morceaux en vrac de produit alimentaire semi-fini aéré congelé (300) comprennent une quantité de sucres simples issus de sucres simples naturellement présents dans lesdits fruits et/ou légumes comprise entre 10 et 30 g/100 g du produit semi-fini et un dépassement compris entre 5 et 35 %, de préférence entre 5 et 25 %.

2.  Procédé selon la revendication 1, dans lequel l'insertion, dans le contenant (200), des morceaux en vrac de produit alimentaire semi-fini aéré congelé (300) précède l'apport, dans le contenant (200), de ladite quantité dosée de liquide.

3.  Procédé selon la revendication 1 ou 2, comprenant l'association du contenant (200), ayant les morceaux en vrac de produit alimentaire semi-fini aéré congelé (300) insérés dans celui-ci, avec un organe de positionnement (20) dudit dispositif (1) configuré pour retenir le contenant (200) et obstruer une bouche d'insertion (203) du contenant (200).

4.  Procédé selon la revendication 1, comprenant le chauffage du liquide, de préférence jusqu'à une température comprise entre 60 et 75 °C, de préférence comprise entre 70 et 75 °C, encore plus préférentiellement d'environ 75 °C avant d'apporter celui-ci dans le contenant (200) selon l'étape b").

5.  Procédé selon l'une quelconque des revendications précédentes, dans lequel c') le broyage ou c") la dissolution dans le contenant (200) des morceaux en vrac de produit alimentaire semi-fini aéré congelé dans le liquide comprend le déplacement d'une tête (40a) dudit organe rotatif (40) entre une pluralité de positions axiales à l'intérieur du contenant (200).

6.  Procédé selon l'une quelconque des revendications précédentes, dans lequel chaque morceau de produit alimentaire semi-fini aéré congelé (300) possède une longueur maximale comprise entre 11 et 18 mm, de préférence comprise entre 12 et 16 mm et/ou un poids compris entre 1,4 et 3,8 g, de préférence compris entre 1,8 et 3,2 g.

7.  Dispositif (1) pour la préparation extemporanée d'un granité, d'un sorbet ou d'une boisson à base de fruits et/ou de légumes, comprenant :

    un bâti de support (10) ;
    un contenant (200) ;
    un organe de positionnement (20) relié au bâti de support (10) configuré pour positionner le contenant (200) dans une zone de préparation (A) ;
    une première buse (65) pour la distribution d'un liquide, placée au niveau de l'organe de positionnement (20) et configurée pour introduire un liquide à température ambiante dans le contenant (200) ;
    une seconde buse (66) pour la distribution d'un liquide, placée au niveau de l'organe de positionnement (20) et configurée pour introduire un liquide à une température plus élevée que la température ambiante dans le contenant (200) ;

un organe rotatif (40), couplé de manière coulissante dans une direction axiale à l'organe de positionnement (20) et mobile par rapport à l'organe de positionnement (20) entre une première position axiale et une seconde position axiale ;

un mécanisme cinématique de mouvement (30) relié de manière fonctionnelle entre l'organe de positionnement (20) et l'organe rotatif (40) pour déplacer l'organe rotatif (40) par rapport à l'organe de positionnement (20) entre la première position axiale et la seconde position axiale ; dans lequel l'organe rotatif (40) comprend une tête (40a) pivotant autour d'un axe axial de rotation (R) et mobile dans une pluralité de conditions de fonctionnement dans la zone de préparation (A), et dans lequel chaque condition de fonctionnement de la pluralité de conditions de fonctionnement de la tête (40a) de l'organe rotatif (40) correspond à une position axiale différente de l'organe rotatif (40) par rapport à la zone de préparation (A) entre la première position axiale et la seconde position axiale.

8. Dispositif (1) selon la revendication 7, dans lequel ledit organe de positionnement (20) comprend une partie de couplage (21) configurée pour retenir le contenant (200) comprenant une paroi d'obstruction (22) faisant face à la zone de préparation (A) et configurée pour obstruer une bouche (203) du contenant (200) lorsque le contenant (200) est couplé à la partie de couplage (21).

9. Dispositif (1) selon la revendication 8, dans lequel ladite première buse (65) et ladite seconde buse (66) sont placées au niveau de ladite paroi d'obstruction (22) sur le côté faisant face au contenant (200) lorsqu'il est couplé à la partie de couplage (21).

10. Dispositif (1) selon l'une quelconque des revendications 7 à 9, dans lequel la seconde buse (66) est en communication fluidique avec un élément chauffant (64) pour la distribution d'un liquide à une température plus élevée que la température ambiante.

11. Dispositif (1) selon la revendication 10, comprenant une pompe (62) reliée à une source de liquide (61), à une première conduite d'alimentation en fluide (63) reliée à la première buse (65) et à une seconde conduite d'alimentation en fluide (63a) reliée à la seconde buse (66) ; l'élément chauffant (64) étant actif le long de la seconde conduite d'alimentation en fluide (63a).

12. Dispositif (1) selon la revendication 8, dans lequel ledit organe rotatif (40) comprend un racloir (45) configuré pour enlever des matières adhérant à ladite paroi d'obstruction (22) pendant une rotation de l'organe rotatif (40) lorsqu'il est dans la première position axiale.

13. Dispositif (1) selon la revendication 12, dans lequel ledit racloir (45) comprend une partie d'extension radiale (44a) qui s'étend perpendiculairement à l'axe de rotation (R) et parallèlement à la paroi d'obstruction (22) et qui se situe de manière adjacente à ladite paroi d'obstruction (22) lorsque ledit organe rotatif (40) est dans la première position axiale.

14. Dispositif (1) selon la revendication 13, dans lequel ledit racloir (45) comprend une partie inclinée (44) qui s'étend à partir d'une première extrémité axialement proximale à l'axe de rotation (R) et d'une seconde extrémité reliée à la partie d'extension radiale (44a).

15. Dispositif (1) selon l'une quelconque des revendications 7 à 14, dans lequel ledit organe de positionnement (20) est solidaire dudit bâti de support (10) et ledit organe rotatif (40) est couplé de manière coulissante audit bâti de support (10).

## FIG 1

**FIG 2**

FIG 3

## FIG 4

FIG 5

FIG 6

## FIG 7

## FIG 8

## FIG 9

## FIG 10

Start

Mixing and homogenization of plant-based
ingredients of the food mixture — 1

Cooling of the food mixture — 2

Batch freezing (freezing and aeration) of the
food mixture — 3

Extrusion of the frozen and aerated food
mixture — 4

Cutting of the frozen and aerated mixture to
form a frozen aerated semi-finished product in
pieces — 5

Cooling of the frozen aerated semi-finished
product in pieces — 6

Bagging of the frozen aerated semi-finished
product in pieces — 7

Packaging of bags — 8

End

# FIG 11

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 4293580 A
- WO 2010040744 A
- US 2007196538 A
- WO 9743909 A
- US 6330850 B